# EUROPÄISCHE PATENTANMELDUNG

(11) **EP 2 439 092 A2**
(43) Veröffentlichungstag der Anmeldung: **11.04.2012**
(21) Anmeldenummer: 11184267.0
(22) Anmeldetag: 07.10.2011
(51) Int. Cl.: B60J 7/12

(54) **Verfahren zur Herstellung eines Verdeckbezugs mit mehreren Schichten**

(30) Priorität: 07.10.2010 DE 102010047857
(71) Anmelder: Wilhelm Karmann GmbH i.l., 49084 Osnabrück (DE)
(72) Erfinder: Seiboth, Daniel, 49082 Osnabrück (DE)
(74) Vertreter: Kronthaler, Wolfgang N.K.

(57) **Zusammenfassung**

Es wird ein Verfahren zur Herstellung eines Verdeckbezugs (4) mit mehreren Schichten beschrieben, umfassend eine äußere Verdeckstoffschicht (8), eine akustisch wirksame Polsterschicht (7) mit Vlies, Polyurethanschaum und/oder Melamin-Weichschaum und eine Funktionsschicht (6), welche auf einer der äußeren Verdeckstoffschicht (8) abgewandten Seite der akustisch wirksamen Polsterschicht (7) mit der akustisch wirksamen Polsterschicht (7) verbunden ist, wobei in einem zur Anlage an starre Verdeckelemente, z. B. Querspriegel (9) und/oder Karosseriebereiche, sowie als vordefinierte Knickstelle vorgesehenen Bereich eine Aufbauhöhe des Verdeckbezugs (4) durch Ausnehmungen (14) zumindest in der akustisch wirksamen Polsterschicht (7) reduziert ist. Zunächst wird die Funktionsschicht (6) mit der akustisch wirksamen Polsterschicht (7) verbunden, die akustisch wirksame Polsterschicht (7) anschließend zur Erzeugung der Ausnehmungen (14) bereichsweise mittels eines Laserenergieeintrags in ihrer Aufbauhöhe reduziert und die äußere Verdeckstoffschicht (8) dann auf der der Funktionsschicht (6) abgewandten Seite der akustisch wirksamen Polsterschicht (7) angeordnet.

## Beschreibung

Die Erfindung betrifft ein Verfahren zur Herstellung eines Verdeckbezugs mit mehreren Schichten nach der im Oberbegriff des Patentanspruchs 1 näher definierten Art.

Aus der Praxis bekannte Verdeckbezüge weisen eine äußere Verdeckstoffschicht, eine mit einem Schaum- und/oder Vliesmaterial ausgebildete akustisch wirksame Polsterschicht und eine dem Fahrzeuginnenraum zugewandte Dekorschicht (Innenhimmel) auf. Um eine gute Schall- und/oder Wärmedämmung zu erzielen und insbesondere Außengeräusche weitestgehend von Fahrzeuginsassen fernzuhalten, weisen diese Verdeckbezüge eine relativ große Aufbauhöhe auf.

Die große Aufbauhöhe dieser Verdeckbezüge beeinträchtigt nachteilhafterweise ein Einfalten des Verdeckbezugs bei einer Verdecköffnungsbewegung und die Höhe eines abgelegten Dachpaketes negativ. Werden die Verdeckbezüge, um diese Probleme zu reduzieren, dünner ausgebildet, wird ihre schalltechnische Isolierungsfähigkeit erheblich verringert. Entsprechend muss ein Kompromiss zwischen den schalltechnischen Eigenschaften einerseits und den mechanischen Eigenschaften andererseits gefunden werden.

Um dieses Problem zu umgehen ist es bekannt, die akustisch wirksame Polsterschicht mit einer variablen Aufbauhöhe herzustellen, wobei die akustisch wirksame Polsterschicht insbesondere in Anlagebereichen mit Verdeckelementen, wie beispielsweise Querspriegeln reduziert werden kann. Dabei kann beispielsweise ein Fahrzeugpackage dadurch reduziert werden, dass die akustisch wirksame Polsterschicht im Bereich von Spriegeln eine geringe Aufbauhöhe aufweist, so dass die Spriegel bei geschlossenem Verdeck näher an der äußeren

Verdeckstoffschicht angeordnet werden können als in Bereichen mit einer größeren Aufbauhöhe. Auch eine Ablagehöhe des Dachpakets kann hierdurch reduziert werden, wenn eine Aufbauhöhe des Verdeckbezugs in hierbei kritischen Bereichen reduziert wird. Derartige akustisch wirksame Polsterschichten werden dabei mit einem Werkzeug hergestellt, welches eine Kontur der gewünschten Form der akustisch wirksamen Polsterschicht aufweist.

Nachteilhafterweise ist allerdings zur Herstellung für verschiedenartig geformte Verdeckbezüge oder Verdeckbezüge mit einer identischen Außenkontur aber einem anderen Verlauf der Aufbauhöhe der akustisch wirksamen Polsterschicht jeweils ein separates Werkzeug nötig. Dieses Herstellungsverfahren ist entsprechend aufwändig und teuer und ist zudem sehr langsam.

Es ist Aufgabe der vorliegenden Erfindung ein Verfahren zur Herstellung eines Verdeckbezugs mit mehreren Schichten zu schaffen, mittels welchem verschiedenartige Verdeckbezüge auf einfache und kostengünstige Weise mit Bereichen reduzierter Aufbauhöhe ausbildbar sind.

Diese Aufgabe wird mit einem Verfahren zur Herstellung eines Verdeckbezugs mit mehreren Schichten nach den Merkmalen des Patentanspruches 1 gelöst.

Vorteilhafte Weiterbildungen eines Verfahrens zur Herstellung eines Verdeckbezugs mit mehreren Schichten nach der Erfindung ergeben sich aus den Unteransprüchen.

Die Erfindung sieht ein Verfahren zur Herstellung eines Verdeckbezugs mit mehreren Schichten vor, umfassend eine äußere Verdeckstoffschicht, eine akustisch wirksame Polsterschicht und eine Funktionsschicht, welche auf einer der äußeren Verdeckstoffschicht abgewandten Seite der akustisch wirksamen Polsterschicht mit der akustisch wirksamen Polsterschicht verbunden ist, wobei in einem zur Anlage an starre Verdeckelemente, z. B. Querspriegel und/oder Karosseriebereiche, sowie als vordefinierte Knickstelle vorgesehenen Bereich eine Aufbauhöhe des Verdeckbezugs durch Ausnehmungen zumindest in der akustisch wirksamen Polsterschicht reduziert ist.

Erfindungsgemäß wird zunächst die Funktionsschicht mit der akustisch wirksamen Polsterschicht verbunden, die akustisch wirksame Polsterschicht anschließend zur Erzeugung der Ausnehmungen bereichsweise mittels eines Laserenergieeintrags in ihrer Aufbauhöhe reduziert und die äußere Verdeckstoffschicht dann auf der der Funktionsschicht abgewandten Seite der akustisch wirksamen Polsterschicht angeordnet.

Mit einem erfindungsgemäßen Verfahren sind verschiedenartige Verdeckbezüge mit unterschiedlichen Formen und unterschiedlichen Verläufen von Aufbauhöhen auf einfache und kostengünstige Weise herstellbar. Eine Herstellung von Verdeckbezügen nach dem erfindungsgemäßen Verfahren ist vorteilhafterweise nicht typengebunden, so dass in sehr kurzer Zeit neue Konzepte aufgebaut werden können. Dies resultiert daraus, dass die Aufbauhöhe des Verdeckbezugs durch den Laserenergieeintrag unabhängig von einer Form des Verdeckbezugs und einer Höhe der akustisch wirksamen Polsterschicht in flexibel festlegbaren Bereichen reduziert werden kann. Ein Verdeckbezug kann nach dem erfindungsgemäßen Verfahren zudem besonders schnell hergestellt werden. Weiterhin kann ein erfindungsgemäß hergestellter Verdeckbezug durch das Vorsehen entsprechender Aufbauhöhenreduzierungen individuell an akustische Anforderungen angepasst werden.

Bei einer vorteilhaften Ausbildung eines erfindungsgemäßen Verfahrens wird ein Laserenergieeintrag auf eine von der Funktionsschicht abgewandte Seite der akustisch wirksamen Polsterschicht gerichtet, wobei der Laserenergieeintrag derart bemessen ist, dass lediglich die akustisch wirksame Polsterschicht durchtrennt wird. Ein derartiges Bearbeitungsverfahren wird auch als Kiss-cut-Verfahren bezeichnet und ermöglicht ein besonders einfaches Reduzieren der Aufbauhöhe des Verdeckbezugs.

Durch den Laserenergieeintrag wird bei einer vorteilhaften Ausbildung des erfindungsgemäßen Verfahrens wenigstens ein die gesamte akustisch wirksame Polsterschicht durchdringender Schnitt in der akustisch wirksamen Polsterschicht vorgenommen. Im Bereich des Schnitts, welcher im Wesentlichen die Breite eines auf die akustisch wirksame Polsterschicht gerichteten Laserstrahls aufweist, können bei einem Einsatz eines derartig hergestellten Verdeckbezugs an einem Verdeck eines Cabriolet-Fahrzeugs vorteilhafterweise Spriegel oder andere Elemente des Verdecks derart angeordnet werden, dass das jeweilige Element zumindest bereichsweise in den Verdeckbezug reicht. Resultierend kann eine Aufbauhöhe eines abgelegten Dachpaketes und somit ein Package des Dachpaketes minimiert werden. Alternativ hierzu kann ein Schnitt in der akustisch wirksamen Polsterschicht auch zur Bildung einer vordefinierten Knickstelle des Verdeckbezugs vorgesehen sein, so dass bei einer Verdecköffnungsbewegung eine definierte Faltung des Verdeckbezugs erzielt werden kann.

Bei einer hierzu alternativen Ausführung des erfindungsgemäßen Verfahrens wird durch den Laserenergieeintrag die akustisch wirksame Polsterschicht wenigstens bereichsweise perforiert. Dies dient insbesondere der Vorgabe von definierten Knickstellen des Verdeckbezugs.

In einer weiteren alternativen Ausführungsform des erfindungsgemäßen Verfahrens wird durch den Laserenergieeintrag eine geschlossene Kontur in die akustisch wirksame Polsterschicht geschnitten und ein Innenteil der Kontur vor einem Verbinden mit der äußeren Verdeckstoffschicht insbesondere manuell von der Funktionsschicht abgenommen bzw. abgelöst. Es können hierdurch flächige Bereiche des Verdeckbezugs mit einer geringen Aufbauhöhe geschaffen werden, in denen auch große Verdeckelemente wie beispielsweise Spriegel bei geschlossenem oder offenem Verdeck zur Reduzierung einer Gesamthöhe des Verdecks einfach angeordnet werden können. Bei guter akustischer Wirkung können beispielsweise Spriegel des Verdecks insbesondere bündig mit der Funktionsschicht innerhalb des Verdeckbezugs angeordnet werden, so dass ein derartiges Verdeck eine besonders geringe Aufbauhöhe aufweist. Die geschlossene Kontur kann dabei sowohl mittig in dem Verdeckbezug angeordnet und ausschließlich durch einen Laserenergieeintrag erzeugt werden, als auch in einem Randbereich des Verdeckbezugs angeordnet sein, wobei die Kontur zusammen mit dem Randbereich des Verdeckbezugs erzeugt wird.

Insbesondere zur Erzeugung einer definierten Faltung des Verdeckbezugs ist es vorteilhaft, wenn der Laserenergieeintrag zur Reduzierung der Aufbauhöhe des Verdeckbezugs in wenigstens einen Seitenbereich des Verdeckbezugs eingebracht wird.

Die Funktionsschicht kann mit der akustisch wirksamen Polsterschicht kaschiert, insbesondere angenadelt oder angeklebt, werden. Ein Vernadeln der Funktionsschicht mit der akustisch wirksamen Polsterschicht ist besonders vorteilhaft, da hierdurch ein weicher und biegsamer Verdeckbezug erzeugt wird.

Zur Anordnung der äußeren Verdeckstoffschicht an der akustisch wirksamen Polsterschicht kann die akustisch wirksame Polsterschicht mit der äußeren Verdeckstoffschicht vollflächig oder zumindest bereichsweise flächig verklebt werden.

Um verbesserte Hafteigenschaften an der äußeren Verdeckstoffschicht zu erzielen, kann die akustisch wirksame Polsterschicht bei einer vorteilhaften Weiterbildung des erfindungsgemäßen Verfahrens vor oder nach Einbringung des Laserenergieeintrags und vor Anbindung an die äußere Verdeckstoffschicht mit einer weiteren, insbesondere als Haftvermittler wirkenden Schicht verbunden werden, welche anschließend mit der äußeren Verdeckstoffschicht verbunden, insbesondere verklebt, wird. Diese weitere Schicht kann beispielsweise als so genannte Chameuse ausgebildet sein, welche insbesondere mit der akustisch wirksame Polsterschicht verbunden wird.

Um ein gutes Gleitverhalten des Verdeckbezugs zu einem Innenhimmel zu erzielen, kann die Funktionsschicht mit Folie, Vlies, insbesondere einem Nadelvlies, oder Filz ausgebildet sein.

Bei einer vorteilhaften Weiterbildung der Erfindung können mehrere Funktionsschichten vorgesehen sein, welche alle auf einer der äußeren Verdeckstoffschicht abgewandten Seite der akustisch wirksamen Polsterschicht angeordnet sind.

Die akustisch wirksame Polsterschicht ist bei einer vorteilhaften Ausführung der Erfindung mit Vlies, Polyurethanschaum und/oder Melamin-Weichschaum ausgebildet, wobei die akustisch wirksame Polsterschicht dämpfend ist und insbesondere elastisch oder viskoelastisch ausgebildet ist. Besonders gute schallisolierende Eigenschaften weist die akustisch wirksame Polsterschicht auf, wenn sie mit einem akustisch wirksamen Schaum- und/oder Vliesmaterial ausgebildet ist. Ein derartiges Material weist sehr gute Dämm- und/oder Absorptionseigenschaften auf, so dass nur sehr wenige Außengeräusche zu den Insassen vordringen können.

Der Laserenergieeintrag wird bei einer vorteilhaften Ausführung eines erfindungsgemäßen Verfahrens mittels einer Laserstrahlquelle, insbesondere einer Kohlenstoffdioxid-Laserstrahlquelle, in den Verdeckbezug eingebracht. Alternativ können zur Einbringung des Laserenergieeintrags auch andere Laserstrahlquellen verwendet werden.

Der Laserenergieeintrag kann bei einer Weiterbildung des Verfahrens mittels eines die Laserstrahlquelle umfassenden, so genannten Sealed-Schneidesystems vorgenommen werden.

Bei einer besonders vorteilhaften Ausführung des erfindungsgemäßen Verfahrens wird auch eine äußere Kontur des Verdeckbezugs durch einen Laserenergieeintrag geschnitten, so dass hierfür vorteilhafterweise keine weiteren Werkzeuge nötig sind.

Weitere Vorteile und vorteilhafte Ausführungen eines Verfahrens zur Herstellung eines Verdeckbezugs mit mehreren Schichten nach der Erfindung ergeben sich aus der Zeichnung und der Beschreibung.

Nachfolgend ist ein vorteilhaftes Ausführungsbeispiel eines erfindungsgemäßen Verfahrens zur Herstellung eines Verdeckbezugs mit mehreren Schichten anhand der Zeichnung prinzipmäßig beschrieben.

Es zeigt:
- Fig. 1: eine vereinfachte dreidimensionale Ansicht eines Ausschnitts eines Cabriolet-Fahrzeugs mit einem Ver- deck, wobei ein Verdeckbezug des Verdecks transparent dargestellt ist;
- Fig. 2: eine schematisierte und nicht maßstäbliche Ansicht eines Aufbaus des Verdeckbezugs;
- Fig. 3: eine schematische Schnittdarstellung des Verdeckbezugs der Fig. 1 entlang des Schnitts III-III der Fig. 1; und
- Fig. 4: eine vereinfachte Draufsicht des Verdeckbezugs der Fig. 1 in Alleinstellung, wobei der Verdeckbezug derart angeordnet ist, dass eine Funktionsschicht ersichtlich ist.

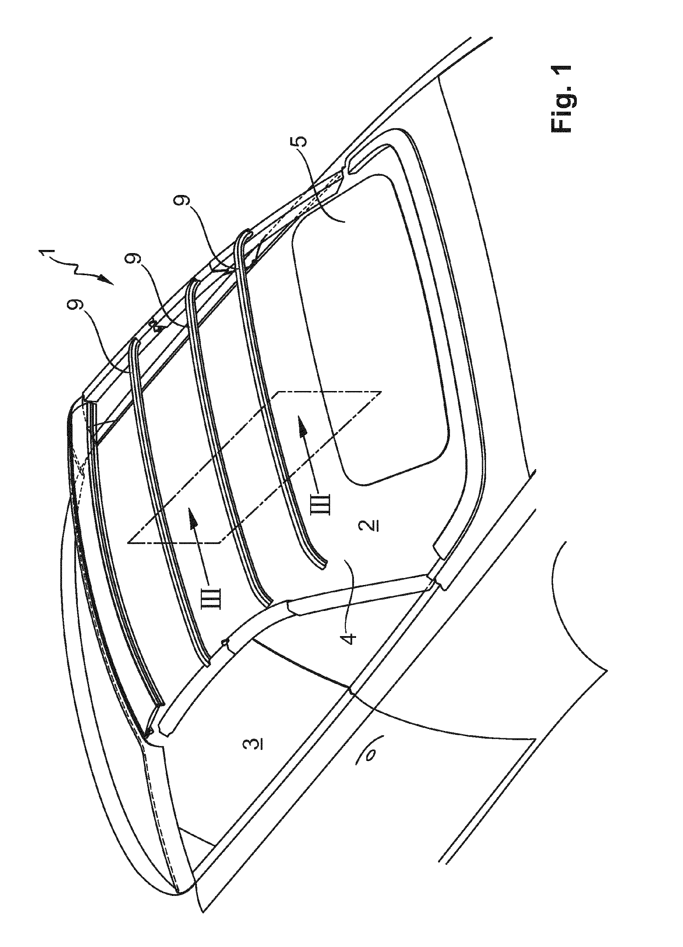

In Fig. 1 ist ein Cabriolet-Fahrzeug 1 mit einem Verdeck 2 gezeigt, welches zwischen einer Verdecköffnungsstellung und der in der Fig. 1 gezeigten, einen Fahrzeuginnenraum 3 überspannenden Verdeckschließstellung bewegbar ist.

Das Verdeck 2 ist als Soft-Top-Verdeck ausgebildet und weist über seiner gesamten Länge einen flexiblen Verdeckbezug 4 auf, der in einem Heckbereich eine Heckscheibe 5 einfasst. Alternativ hierzu könnte das Verdeck 2 auch ganz oder teilweise starre Dachteile aufweisen zwischen denen der Verdeckbezug angeordnet ist.

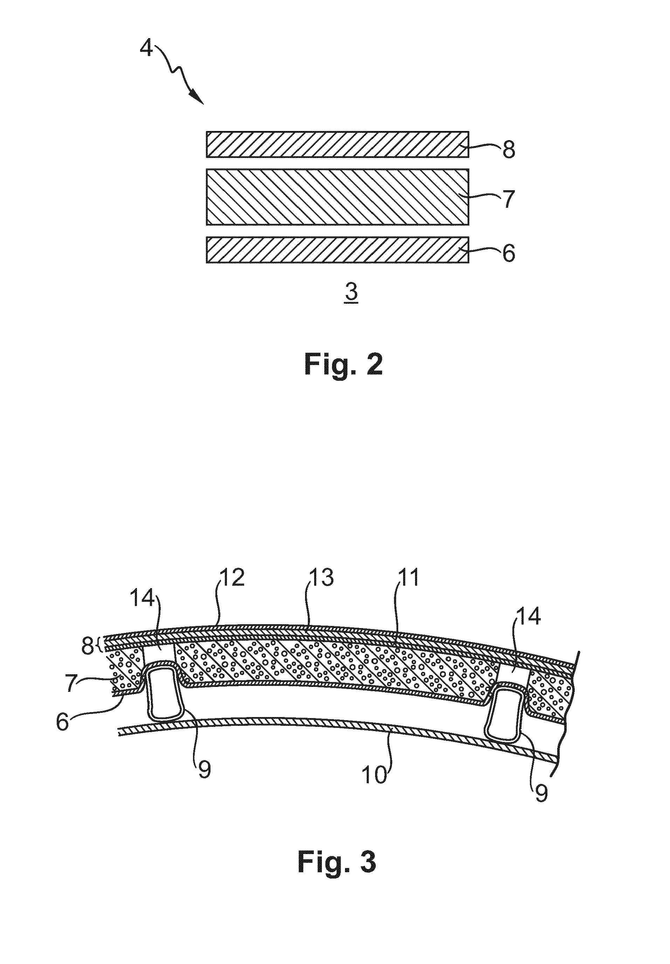

Der Verdeckbezug 4 weist - wie in Fig. 2 ersichtlich ist - einen Sandwichaufbau mit einer Funktionsschicht 6, einer akustisch wirksamen Polsterschicht 7 und einer äußeren Verdeckstoffschicht 8 auf, wobei die akustisch wirksame Polsterschicht 7 zwischen der äußeren Verdeckstoffschicht 8 und der dem Fahrzeuginnenraum 3 zugewandten Funktionsschicht 6 angeordnet ist. Eine Aufbaudicke des Verdeckbezugs 4 kann dabei vorliegend zwischen etwa 3 mm und 25 mm variieren.

Die äußere Verdeckstoffschicht 8 ist vorliegend dreilagig ausgebildet, wobei eine dem Fahrzeuginnenraum 3 zugewandte, ein Untergewebe 11 bildende Schicht der äußeren Verdeckstoffschicht 8 mit Polyester (PES)-Fasern ausgebildet ist. Ein der PES-Faserschicht gegenüberliegendes, eine Außenhaut des Verdecks 2 bildendes Obergewebe 12 der äußeren Verdeckstoffschicht 8 ist mit **P**oly**a**cryl**n**itril (PAN)-Fasern und/oder Polyester (PES)-Fasern ausgebildet. Zwischen der PAN/PES-Schicht und der PES-Schicht ist eine Hohlräume aufweisende Zwischenschicht 13 ausgebildet, welche insbesondere eine Butylschicht oder eine Chloropren-Gummischicht sein kann.

Die akustisch wirksame Polsterschicht 7, welche eine Aufbauhöhe von etwa 2 mm bis 24 mm, insbesondere 8 mm bis 18 mm haben kann, weist vorliegend ein akustisch wirksamen Schaum- und/oder Vliesmaterial auf, welches mit absorbierendem Vlies, elastischem oder viskoelastischem Polyurethan- und/oder Melamin-Weichschaum ausgebildet ist.

Die akustisch wirksame Polsterschicht 7 weist ein Flächengewicht von mindestens 200 g/m2, insbesondere von mehr als 600 g/m² auf um niederfrequent wirksam zu sein. Die akustisch wirksame Polsterschicht 7 weist ein Raumgewicht von etwa 10 kg/m³ bis 200 kg/m³, insbesondere von 50 kg/m³ bis 150 kg/m³, eine Stauchhärte kleiner 12 kPa, insbesondere zwischen 1 kPa und 6 kPa, eine Funktionsfähigkeit im Temperaturbereich von -40°C bis 120°C und ein Brandverhalten von kleiner oder gleich 100 mm auf. Durch das hohe Raumgewicht wird eine sehr gute Dämmung, d. h. eine große Schallreflexion durch die akustisch wirksame Polsterschicht 7 erzielt.

Die Funktionsschicht 6 kann sowohl als Vlies, insbesondere Nadelvlies, Filz und/oder Folie ausgebildet sein und weist in Kombination mit der akustisch wirksamen Polsterschicht eine gute Absorptionsfähigkeit auf. Weiterhin dient die Funktionsschicht 6 insbesondere zur Gewährleistung eines Gleitverhaltens gegenüber Gestellkomponenten sowie des Innenhimmels 10. Die Funktionsschicht 6 kann eine Aufbauhöhe von etwa 1 mm bis 10 mm aufweisen. Insbesondere hat sie in Kombination mit der akustisch wirksamen Polsterschicht eine absorbierende Wirkung und ist akustisch hochfrequent wirksam.

Wie in der Fig. 3 ersichtlich ist, liegen in geschlossener Verdeckposition beispielsweise in Verdeckquerrichtung verlaufende Querspriegel 9 des Verdecks 2 an dem Verdeckbezug 4 an. An einer dem Fahrzeuginnenraum 3 zugewandten Seite der Querspriegel 9 ist der Innenhimmel 10 angeordnet, welcher Fahrzeuginsassen einen ansprechenden optischen Eindruck des Verdecks 2 vermittelt. Die Querspriegel 9 können für den Innenhimmel 10 als mittelbare oder unmittelbare Träger dienen.

Um eine durch den Verdeckbezug 4, die Spriegel 9 und den Innenhimmel 10 gebildete Aufbauhöhe des Verdecks 2 sowohl bei geöffnetem Verdeck 2 als auch bei geschlossenem Verdeck 2 sehr gering zu halten. Durch die Reduzierung der Aufbauhöhe des Verdeckbezugs 4 im Bereich der Querspriegel 9 können die Querspriegel 9 bereichsweise innerhalb des Verdeckbezugs 4 oder insbesondere bündig mit der Funktionsschicht 6 innerhalb des Verdeckbezugs 4 angeordnet werden, so dass eine Aufbauhöhe des gesamten Verdecks 2 gegenüber einer Anordnung der Querspriegel 9 an einer Position des Verdeckbezugs 4 ohne reduzierte Aufbauhöhe verkleinert ist. Hierdurch reduziert sich ebenso das Package des abgelegten Dachpaketes.

Der Verdeckbezug 4 kann alternativ hierzu auch in Bereichen, welche in offener Verdeckposition oder in geschlossener Verdeckposition in Anlage zu anderen Verdeckelementen, wie beispielsweise einer C-Säule, oder Elementen einer Karosserie, wie beispielsweise eines Verdeckkastendeckels, angeordnet sind, an die Form des jeweiligen Elements angepasst in seiner Aufbauhöhe reduziert sein, so dass das jeweilige Element in geschlossener und/oder offener Position des Verdecks 2 zumindest bereichsweise innerhalb der akustisch wirksamen Polsterschicht 7 und somit sehr nah an der äußeren Verdeckstoffschicht 8 angeordnet werden kann. Weiterhin kann der Verdeckbezug 4 auch Bereiche mit einer reduzierten Aufbauhöhe aufweisen, welche zur Bildung von definierten Knickstellen des Verdecks 2 bei einer Verdecköffnungs- und/oder Schließbewegung dienen.

Zur Herstellung des Verdeckbezugs 2 wird zunächst die akustisch wirksame Polsterschicht 7 mit der Funktionsschicht 6 kaschiert, insbesondere durch ein Vernadeln oder Verkleben. Hieran anschließend wird die akustisch wirksame Polsterschicht 7 von einer der Funktionsschicht 6 abgewandten Seite durch eine Lasereinrichtung mit einem Laserenergieeintrag beaufschlagt. Der Laserenergieeintrag wird dabei derart bemessen, dass er zum Durchschneiden der akustisch wirksamen Polsterschicht 7 ausreicht, aber die Funktionsschicht 6 nicht durchdringen kann.

Die Lasereinrichtung ist hierzu insbesondere als Schneidsystem mit einer integrierten Kohlenstoffdioxid-Laserstrahlquelle (sealed) ausgebildet und weist eine dem jeweiligen Material angepasste Leistung auf. Die Lasereinrichtung hat vorliegend eine adressierbare Auflösung von etwa 0,01 mm und eine Arbeitsgeschwindigkeit von etwa 1 mm/sec bis zu 1000 mm/sec.

Durch den Laserenergieeintrag können Schnitte oder eine Perforation in der akustisch wirksamen Polsterschicht 7 erzeugt werden, wobei die Schnitte im Wesentlichen die Breite eines Laserstrahls der Lasereinrichtung aufweisen. Dies wird auch als Lasercuttern bezeichnet. Die Schnitte können dabei senkrecht in der akustisch wirksamen Polsterschicht 7 oder in einem von bis zu 90° gegenüber einer Oberfläche der akustisch wirksamen Polsterschicht 7 abweichenden Winkel in der akustisch wirksamen Polsterschicht 7 eingebracht werden.

Um die Aufbauhöhe der akustisch wirksamen Polsterschicht 7 in einem größeren Bereich zu reduzieren, kann mit der Lasereinrichtung eine Kontur in die akustisch wirksame Polsterschicht 7 geschnitten werden. Die Kontur kann einerseits ausschließlich durch einen oder mehrere Schnitte der Lasereinrichtung, andererseits auch zusammen mit einem Randbereich der akustisch wirksamen Polsterschicht 7 gebildet sein. Ein von der beliebig ausbildbaren Kontur umgebener Innenkörper der akustisch wirksamen Polsterschicht 7 wird anschließend insbesondere manuell von der Funktionsschicht 6 abgelöst.

Die durch den Laserenergieeintrag erzeugte Kontur in der akustisch wirksamen Polsterschicht 7 wird dabei derart an der akustisch wirksamen Polsterschicht 7 angeordnet, dass eine nach Ablösen des Innenkörpers von der Funktionsschicht 6 entstehende Ausnehmung 14 der akustisch wirksamen Polsterschicht 7, d. h. ein Bereich mit einer reduzierten Aufbauhöhe, bei offenem und/oder geschlossenem Verdeck 2 mit einem Verdeckelement, insbesondere einem Querspriegel 9, und/oder Karosseriebereichen zusammenwirkt.

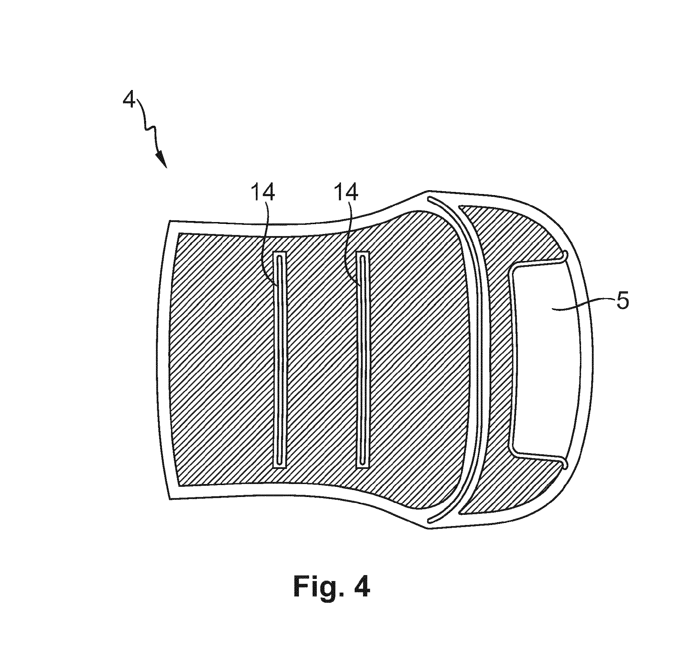

In Fig. 4 ist ersichtlich, dass der Verdeckbezug 4 zwei Bereiche 14 aufweist, in denen die Aufbauhöhe des Verdeckbezugs 4 reduziert ist und welche in Einbauposition des Verdeckbezugs 4 mit Verdeckelementen zusammenwirken, vorliegend mit Querspriegeln 9 und Karosseriebereichen.

Neben dem Vorsehen von Ausnehmungen 14 für Elemente des Cabriolet-Fahrzeugs 1 können auch Ausnehmungen 14 zur Vorgabe von definierten Knickstellen des Verdecks 2 ausgebildet werden, mittels welchen eine Faltung des Verdeckbezugs 4 bei einer Überführung des Verdecks 2 zwischen der offenen Position und der geschlossenen Position erleichtert wird. Hierzu können in die akustisch wirksame Polsterschicht 7, insbesondere in einem Randbereich des Verdeckbezugs 4 Schnitte oder eine Perforation eingebracht werden. Alternativ hierzu können zur Schaffung einer definierten Knickstelle durch den Laserenergieeintrag auch Konturen mit einem anschließenden Auslösen eines Innenkörpers geschnitten werden.

Sind sämtliche Konturen und/oder Schnitte in der akustisch wirksamen Polsterschicht 7 erzeugt und gegebenenfalls Innenkörper von der Funktionsschicht 6 abgelöst, wird die äußere Verdeckstoffschicht 8 mittels eines Klebstoffsystems an der der Funktionsschicht 6 abgewandten Seite der akustisch wirksamen Polsterschicht 7 angeordnet, wobei ein Klebstoffauftrag des als Hotmelt-Klebesystems oder dergleichen ausgebildeten Klebstoffsystemen insbesondere durch Sprühkopfroboter erfolgt. In Bereichen mit ausgeschnittenen Stellen der akustisch wirksamen Polsterschicht 7, kann eine Verbindung der Funktionsschicht 6 mit der äußeren Verdeckstoffschicht 8 erfolgen, vorliegend ist dieses aus funktionellen Erfordernissen häufig nicht notwendig.

Um eine akustische Wirkung der akustisch wirksamen Polsterschicht 7 optimal zu nutzen, ist eine großflächige Anbindung an die äußere Verdeckstoffschicht 8 vorgesehen. Der Klebstoffauftrag kann im Nahbereich von Faltungskanten der akustisch wirksamen Polsterschicht 7 allerdings auch unterbrochen sein, so dass manche Bereiche der akustisch wirksamen Polsterschicht 7 nicht mit der äußeren Verdeckstoffschicht 8 verklebt werden. Hierdurch kann eine unerwünschte Faltenbildung oder die Bildung von scharfen Knickstellen bei der Überführung des Verdecks 2 zwischen seiner offenen Position und seiner geschlossenen Position vermieden werden. Zur Herstellung dieser Bereiche kann die akustisch wirksame Polsterschicht 7 bereichsweise mit Schutzfolie abgedeckt und dann mit dem Kleber übersprüht oder überstrichen werden. Die Schutzfolie wird anschließend abgezogen, so dass der dadurch offengelegte Bereich frei von Klebstoff ist.

Eine Aktivierung des Klebstoffsystems kann entweder unter Einwirkung von Druck und Wärme oder ausschließlich unter Einwirkung von Druck erfolgen, wobei die Verklebung insbesondere Temperaturen von -40°C bis 120°C standhalten muss.

Alternativ hierzu kann es zur Bildung einer geeigneten Klebeverbindung auch vorgesehen sein, dass auf die akustisch wirksame Polsterschicht 7 eine als Haftvermittler dienende Schicht aufkaschiert wird, welche anschließend mit der äußeren Verdeckstoffschicht 8 in der beschriebenen Weise verklebt wird.

## Patentansprüche

1. Verfahren zur Herstellung eines Verdeckbezugs (4) mit mehreren Schichten, umfassend eine äußere Verdeckstoffschicht (8), eine akustisch wirksame Polsterschicht (7) und eine Funktionsschicht (6), welche auf einer der äu-βeren Verdeckstoffschicht (8) abgewandten Seite der akustisch wirksamen Polsterschicht (7) mit der akustisch wirksamen Polsterschicht (7) verbunden ist, wobei in einem zur Anlage an starre Verdeckelemente, z. B. Querspriegel (9) und/oder Karosseriebereiche, sowie als vordefinierte Knickstelle vorgesehenen Bereich eine Aufbauhöhe des Verdeckbezugs (4) durch Ausnehmungen (14) zumindest in der akustisch wirksamen Polsterschicht (7) reduziert ist,
**dadurch gekennzeichnet,**
**dass** zunächst die Funktionsschicht (6) mit der akustisch wirksamen Polsterschicht (7) verbunden wird, die akustisch wirksame Polsterschicht (7) anschließend zur Erzeugung der Ausnehmungen (14) bereichsweise mittels eines Laserenergieeintrags in ihrer Aufbauhöhe reduziert wird und die äußere Verdeckstoffschicht (8) dann auf der der Funktionsschicht (6) abgewandten Seite der akustisch wirksamen Polsterschicht (7) angeordnet wird.

2. Verfahren nach Anspruch 1,
**dadurch gekennzeichnet,**
**dass** ein Laserenergieeintrag auf eine von der Funktionsschicht (6) abgewandte Seite der akustisch wirksamen Polsterschicht (7) gerichtet wird, wobei der Laserenergieeintrag derart bemessen ist, dass lediglich die akustisch wirksame Polsterschicht (7) durchtrennt wird.

3. Verfahren nach einem der Ansprüche 1 oder 2,
**dadurch gekennzeichnet, dass** durch den Laserenergieeintrag wenigstens ein die gesamte akustisch wirksame Polsterschicht (7) durchdringender Schnitt in der akustisch wirksamen Polsterschicht (7) erzeugt wird.

4. Verfahren nach einem der Ansprüche 1 bis 3,
**dadurch gekennzeichnet,**
**dass** durch den Laserenergieeintrag die akustisch wirksame Polsterschicht (7) wenigstens bereichsweise perforiert wird.

5. Verfahren nach einem der Ansprüche 1 bis 4,
**dadurch gekennzeichnet,**
**dass** durch den Laserenergieeintrag eine geschlossene Kontur in die akustisch wirksame Polsterschicht (7) geschnitten wird und ein Innenteil der Kontur vor einem Verbinden mit der äußeren Verdeckstoffschicht (8) insbesondere manuell von der Funktionsschicht (6) abgelöst wird.

6. Verfahren nach einem der Ansprüche 1 bis 5,
**dadurch gekennzeichnet,**
**dass** der Laserenergieeintrag zur Reduzierung der Aufbauhöhe des Verdeckbezugs (4) in wenigstens einen Seitenbereich des Verdeckbezugs (4) eingebracht wird.

7. Verfahren nach einem der Ansprüche 1 bis 6,
**dadurch gekennzeichnet,**
**dass** die Funktionsschicht (6) mit der akustisch wirksamen Polsterschicht (7) kaschiert, insbesondere angenadelt oder angeklebt wird.

8. Verfahren nach einem der Ansprüche 1 bis 7,
**dadurch gekennzeichnet,**
**dass** die akustisch wirksame Polsterschicht (7) mit der äußeren Verdeckstoffschicht (8) zumindest bereichsweise flächig verklebt wird.

9. Verfahren nach einem der Ansprüche 1 bis 7,
**dadurch gekennzeichnet,**
**dass** die akustisch wirksame Polsterschicht (7) vor oder nach Einbringung des Laserenergieeintrags und vor Anbindung an die äußere Verdeckstoffschicht (8) mit einer weiteren, insbesondere als Haftvermittler wirkenden Schicht kaschiert wird, welche anschließend mit der äußeren Verdeckstoffschicht (8) verbunden, insbesondere verklebt, wird.

10. Verfahren nach einem der Ansprüche 1 bis 9,
**dadurch gekennzeichnet,**
**dass** die Funktionsschicht (6) mit Folie, Vlies oder Filz ausgebildet ist.

11. Verfahren nach einem der Ansprüche 1 bis 10,
**dadurch gekennzeichnet,**
**dass** mehrere Funktionsschichten (6) vorgesehen sind.

12. Verfahren nach einem der Ansprüche 1 bis 11,
**dadurch gekennzeichnet,**
**dass** die akustisch wirksame Polsterschicht (7) mit Vlies, Polyurethanschaum und/oder Melamin-Weichschaum ausgebildet ist.

13. Verfahren nach einem der Ansprüche 1 bis 12,
**dadurch gekennzeichnet,**
**dass** die akustisch wirksame Polsterschicht (7) dämpfend ist und insbesondere elastisch oder viskoelastisch ausgebildet ist.

14. Verfahren nach einem der Ansprüche 1 bis 13,
**dadurch gekennzeichnet,**
**dass** der Laserenergieeintrag mittels einer Laserstrahlquelle, insbesondere einer Kohlenstoffdioxid-Laserstrahlquelle, eingebracht wird.

15. Verfahren nach einem der Ansprüche 1 bis 14,
**dadurch gekennzeichnet,**
**dass** durch den Laserenergieeintrag eine äußere Kontur des Verdeckbezugs (4) geschnitten wird.
